# EUROPÄISCHE PATENTSCHRIFT

(11) **EP 1 373 136 B1**
(45) Veröffentlichungstag und Bekanntmachung des Hinweises auf die Patenterteilung: **03.10.2007**
(21) Anmeldenummer: 02724245.2
(22) Anmeldetag: 18.03.2002
(51) Int. Cl.: C01B 17/765, C01B 17/58

(54) **VERFAHREN ZUM REGENERIEREN VON SCHWEFELSÄURE AUS SCHWEFELHALTIGEN STOFFEN**
METHOD FOR THE REGENERATION OF SULPHURIC ACID FROM SULPHUR-CONTAINING MATERIALS
PROCEDE DE REGENERATION D'ACIDE SULFURIQUE A PARTIR DE PRODUITS SULFUREUX

(30) Priorität: 20.03.2001 DE 10113573
(43) Veröffentlichungstag der Anmeldung: 02.01.2004
(73) Patentinhaber: Air Liquide Deutschland GmbH, 40235 Düsseldorf (DE)
(72) Erfinder: GROSS, Gerhard, 47877 Willich (DE); LAILACH, Günter, 14467 Potsdam (DE)
(74) Vertreter: Kahlhöfer, Hermann
(86) Internationale Anmeldenummer: PCT/EP2002/002970
(87) Internationale Veröffentlichungsnummer: WO 2002/074687

(56) Entgegenhaltungen:
- DE-A- 19 800 800
- GB-A- 1 385 405
- US-A- 3 536 446
- US-A- 4 016 248
- US-A- 4 088 742

## Beschreibung

Die Erfindung-betrifft ein Verfahren zum Regenerieren von Schwefelsäure aus schwefelhaltigen Reststoffen, umfassend folgende Verfahrensschritte: thermische Spaltung der Reststoffe in einem Spaltreaktor durch Verbrennen eines oder mehrerer Energieträger mit einem Oxidationsmittel in Form von Sauerstoff unter Bildung von Prozessgas mit vorgegebenem Schwefeldioxid-Gehalt, Erzeugen von Kontaktgas durch Mischen des Prozessgases mit Sauerstoff-haltigem Gas, Einleiten des Kontaktgases in einen Kontaktkessel einer Schwefelsäure-Kontaktanlage, und katalytische Umsetzung des im Kontaktgas enthaltenen Schwefeldioxides zu Schwefelsäure und/oder Oleum.

Nach dem Stand der Technik erfolgt die Aufarbeitung schwefelhaltiger Reststoffe durch thermische Spaltung in sogenannten Spaltanlagen. Die Reststoffe werden hierbei einer durch heiße Rauchgase erzeugten Erhitzungszone eines feuerfest ausgekleideten Reaktors zugeführt und darin bei 900 bis 1300 °C unter Bildung von SO₂ thermisch gespalten. Die Erhitzungszone wird durch Verbrennen eines Brennstoffs mit einem sauerstoffhaltigen Oxidationsmittel erzeugt. Die aus den Reaktoren, im folgenden auch als "Spaltöfen" bezeichnet, mit ca. 1000 °C austretenden. Reaktionsgase und gegebenenfalls Stäube werden in Abhitzekessein oder Rekuperatoren auf etwa 300 °C gekühlt. Anschließend werden die Gase durch Entstaubung, Nasswäsche in einer Quenche, Wasserkondensation, Entnebelung und Trocknung mit konzentrierter Schwefelsäure für die Umsetzung des SO₂ mit O₂ zu SO₃ im Kontaktkessel aufbereitet. Durch Zumischen von getrockneter Luft entsteht ein 4 bis 8 Vol-% SO₂ enthaltendes Kontaktgas, das zu Schwefelsäure und/oder Oleum umgesetzt wird. Die Auslegung der Schwefelsäureanlage, insbesondere der Wärmetauscher des Kontaktsystems erfolgt so, dass eine autotherme Prozessführung ermöglicht wird.

Bei der thermischen Spaltung Schwefel-haltiger Reststoffe und Abfälle, wie Gebrauchtschwefelsäure oder Metallsulfate, und bei der oxidierenden Röstung sulfidischer Erze werden Prozessgase erzeugt, aus denen beim Mischen mit der erforderlichen Menge Luft Kontaktgas mit einer Schwefeldioxid-Konzentration im Bereich von 4 bis 8 Vol-% entsteht. Die Größe der für eine bestimmte Schwefelsäure-Produktionskapazität erforderlichen Anlage ist etwa umgekehrt proportional zur Schwefeldioxid-Konzentration. Um eine autotherme Prozessführung zu gewährleisten, müssen die Austauschflächen der Gas-Gas-Wärmeaustauscher mit abnehmender Schwefeldioxid-Konzentration jedoch überproportional vergrößert werden, wodurch die Wirtschaftlichkeit des Gesamtprozesses erheblich beeinträchtigt wird.

Es ist bekannt, bei der katalytischen Oxidation von Schwefeldioxid mit Sauerstoff zu Schwefeltrioxid ein Mehrfaches der stöchiometrisch erforderlichen Sauerstoff-Menge einzusetzen, um einen möglichst vollständigen Schwefeldioxid-Umsatz zu erreichen. Bei sogenannten Doppelkontaktsystemen wird das 2- bis 2,4-fache der erforderlichen Sauerstoff-Menge eingesetzt (entsprechend einem Sauerstoff : Schwefeldioxid-Volumenverhältnis von 1,0 bis 1,2), bei Einfachkontaktsystemen mehr als das 3-fache. Dadurch ergeben sich große Gasvolumenströme und entsprechend große Anlagen (vgl. Winnacker. Küchler, Chemische Technologie, Bd. 2, Carl Hanser Verl., 4. Aufl., 1982, S. 36-57).

In der DE-A 197 22 570 ist ein Verfahren beschrieben, bei welchem die Schwefeldioxid-Konzentration von Prozessgas aus Röst-oder Spaltanlagen dadurch erhöht wird, dass als Oxidationsmittel Sauerstoff oder Sauerstoff-angereicherte Luft anstelle von Luft eingesetzt wird. Dies bietet besondere Vorteile, weil gleichzeitig die Kapazität der entsprechenden Röst- oder Spaltanlagen erhöht werden kann, deren limitierendes Merkmal in den meisten Fällen die Größe des Gasvolumenstromes ist. Zusätzlich führt der Einsatz von Sauerstoff bei den stark endothermen Spaltprozessen zu einer erheblichen Energieeinsparung. Die potentiellen Vorteile einer möglichen Kapazitätserhöhung bei der Prozessgaserzeugung können jedoch in den meisten bestehenden Anlagen nicht genutzt werden, weil die erhöhte Schwefeldioxid-Fracht der Prozessgase die Auslegungskapazität des Schwefelsäure-Kontaktsystems überschreitet. Der Bau einer neuen Kontaktanlage erfordert aber nicht nur einen sehr hohen Investitionsaufwand, sondern scheitert häufig schon am erhöhten Platzbedarf der größeren Anlage.

Aufgabe der vorliegenden Erfindung ist es deshalb, ein wirtschaftliches Verfahren anzugeben, das eine Erhöhung des Schwefeldioxid-Umsatzes einer Kontaktanlage ermöglicht, und das es insbesondere bei einem vorhandenen Kontaktsystem zum Herstellen von Schwefelsäure und/oder Oleum aus Kontaktgas erlaubt, die Auslegungskapazität des Kontaktsystems bezüglich der Schwefeldioxid-Fracht ohne Nachteile zu überschreiten.

Diese Aufgabe wird ausgehend von dem Verfahren der eingangs genannten Gattung erfindungsgemäß dadurch gelöst, dass mindestens ein erster Teilstrom des Kontaktgases vor dem Einleiten in den Kontaktkessel einem Vorkontaktkessel zugeführt wird, in welchem Schwefeldioxid unter Bildung eines SO₃-haltigen Reaktionsgases oxidiert wird, und dass das SO₃-haltige Reaktionsgas in einen Zwischenabsorber eingeleitet, darin SO₃ absorbiert, und als SO₂-abgereichertes Gas anschließend in den Kontaktkessel eingeleitet wird.

Erfindungsgemäß wird mindestens ein erster Teilstrom des Kontaktgases abgezweigt und vor dem Einleiten in den Kontaktkessel einer Zwischenbehandlung unterzogen, durch die die Schwefeldioxid-Fracht dieses Teilstroms deutlich reduziert wird. Erst danach wird der in seiner Schwefetdioxid-Frächt verringerte erste Teilstrom als SO₂-abgereichertes Gas dem Kontaktkessel zugeführt. Die erfindungsgemäße Verfahrensweise erlaubt die Aufbereitung eines Gesamtstroms mit einer Schwefeldioxid-Fracht, die größer ist als der Soll-Schwefeldioxid-Fracht des Kontaktsystems (im folgenden auch als "Auslegungskapazität" bezeichnet).

Zur Durchführung der Zwischenbehandlung ist ein Vorkontaktsystem vorgesehen, das einen Vorkontaktkessel umfasst, in welchem Schwefeldioxid unter Bildung eines SO₃-haltigen Reaktionsgases oxidiert wird, und einen. Zwischenabsorber, in welchem SO₃ aus dem SO₃-haltigen Reaktionsgas absorbiert wird.

Der erste Teilstrom kann somit durch dieses Vorkontaktsystem geleitet werden, derart, dass mindestens die die Auslegungskapazität des Kontaktsystems überschreitende Schwefeldioxid-Fracht zu Schwefeltrioxid umgesetzt wird. Das so gebildete Schwefeltrioxid wird in einem Zwischenabsorber absorbiert und erst danach wird der nunmehr an Schwefeldioxid abgereicherte erste Teilstrom in den Kontaktkessel des Kontaktsystems geleitet.

Diese Verfahrensweise ermöglicht somit ohne aufwendige Neu- oder Umbaumaßnahmen, die Auslegungskapazität eines vorhandenen Kontaktsystems bezüglich der Schwefeldioxid-Fracht zu überschreiten.

Es hat sich als günstig erwiesen, das SO₃-haltige Reaktionsgas vor Einleitung in den Zwischenabsorber auf eine Temperatur im Bereich zwischen 180°C und 300 °C abzukühlen. Im Zwischenabsorber wird das Schwefeltrioxid in Schwefelsäure bei einer Temperatur im Bereich von 70 bis 200°C absorbiert. Durch die vorherige Abkühlung des SO₃-haltigen Reaktionsgases wird eine höhere Effizienz der Absorption erreicht und ein Aufwärmen der Schwefelsäure verhindert. Für die Abkühlung_können beispielsweise_kältere .Gase eingesetzt werden.

Eine weitere Verfahrensverbesserung besteht darin, das SO₂-abgereicherte Gas vor dem Einleiten in den Kontaktkessel auf 370 °C bis 450 °C zu erhitzen.

Bevorzugt wird das gesamte SO₂-reiche Kontaktgas in einem Wärmeaustauschersystem der Kontaktanlage auf eine Temperatur im Bereich von 370 bis 430°C erhitzt, bevor mindestens der erste Teilstrom des erhitzten Kontaktgases in den Vorkontaktkessel des Vorkontaktsystems geleitet wird. Infolge der exothermen Oxidationsreaktion des Schwefeldioxids zu Schwefeltrioxid steigt die Gastemperatur auf 500 bis 650°C. Das nahezu SO₃-freie, SO₂-abgereicherte Gas wird in einem Vorkontaktwärmeaustauscher durch das aus dem Vorkontaktkessel austretende SO₃-haltige Gas auf eine Temperatur im Bereich von 370 bis 450°C erhitzt und, gegebenenfalls gemischt mit dem verbliebenen erhitzten Teilstrom des ursprünglichen Kontaktgases, in den Kontaktkessel des Kontaktsystems geleitet.

Das erfindungsgemäße Verfahren ist besonders vorteilhaft für die Verarbeitung von Prozessgasströmen, deren Schwefeldioxid-Fracht die Auslegungskapazität des Kontaktsystems um das 1,1- bis 2-fache übersteigt. Bei einer Schwefelsäure-Kontaktanlage, die eine Auslegungskapazität für eine vorgegebene Schwefeldioxid-Fracht aufweist, übersteigt die Schwefeldioxid-Fracht des Kontaktgases die Auslegungskapazität der Kontaktanlage um das 1,1- bis 2-fache. Da das kontaktgas mit einer Schwefeldioxid-Fracht oberhalb der Auslegungskapazität dem aus Kontaktanlage und Vorkontaktsystem bestehenden Gesamtsystem zugeführt wird, wird eine Kapazitätssteigerung der Gesamtanlage bei vergleichsweise geringen Investitionskosten für das Vorkontaktsystem ermöglicht. Das vorgeschlagene Verfahren bietet weiterhin den Vorteil, dass bei geringerer Überschreitung der Auslegungskapazität nur ein kleiner Teilstrom des SO₂-reichen Kontaktgases durch das Vorkontaktsystem zu leiten ist.

Es hat sich als besonders günstig erweisen, das SO₂-abgereicherte Gas vor dem Einleiten in den Kontaktkessel mit einem zweiten Teilstrom des Kontaktgases mit höherer Schwefeldioxid-Konzentration zu mischen. Das aus dem Vorkontaktsystem austretende SO₂-abgereicherte Gas wird zum Beispiel mit dem gesamten restlichen Kontaktgas gemischt in den Kontaktkessel geleitet. Somit wird nur ein Teilstrom der im Kontaktsystem aufgeheizten Gase durch das Vorkontaktsystem geleitet und nach den Wiederaufheizen mit dem restlichen SO₂-reichen Teilgasstrom gemischt.

Dabei wird vorzugsweise der Volumenanteil des ersten Teilstroms so gewählt, dass durch das Mischen mit dem zweiten Teilstrom ein Kontaktgasgemisch erzeugt wird, das eine Schwefeldioxid-Fracht aufweist, die von der Auslegungskapazität um maximal +/- 10% abweicht. Die hohe Schwefeldioxid-Fracht des Kontaktgases wird so besonders wirtschaftlich in ein SO₂-ärmeres Kontaktgasgemisch umgesetzt, dessen Schwefeldioxid-Fracht im wesentlichen der Auslegungskapazität des Kontaktsystems entspricht. Durch die Einstellung eines Teilstromes über das Vorkontaktsystem kann der aus SO₂-armem und SO₂-reichem Kontaktgas gemischte Gasstrom zum Kontaktsystem so eingestellt werden, dass sowohl der Volumenstrom wie auch die Schwefeldioxid-Konzentration der Auslegung des Kontaktsystems entsprechen.

In einer bevorzugten Verfahrensvariante des erfindungsgemäßen Verfahrens werden im Vorkontaktkessel im Bereich zwischen 40 % und 60 % der Schwefeldioxid-Fracht des ersten Teilstroms oxidiert. Hierzu ist der Kontaktkessel des Vorkontaktsystems vorzugsweise als 1-Horden-Kontakt ausgelegt.

Bei der Erzeugung des Kontaktgases aus dem gereinigten und getrockneten Prozessgas wird für die Schwefeldioxid -Fracht, die der Auslegungskapazität der Kontaktanlage entspricht, ein Sauerstoff : Schwefeldioxid-Volumenverhältnis im Bereich von 1,0 bis 1,2 zu 1 eingestellt, entsprechend der Auslegung der vorhandnen Doppelkontaktanlage, oder ein Verhältnis im Bereich von 1,5 bis 2,0 zu 1, wenn es sich bei der vorhandenen Anlage um eine Einfachkontaktanlage handelt.

Für die über die Auslegungskapazität hinausgehende Schwefeldioxid-Fracht wird dem Prozessgas das Sauerstoff haltige Gas-vorzugsweise in einer Menge zugemischt, derart, dass die dabei zugemischte Sauerstoffmenge die für eine stöchiometrische Umsetzung der die Auslegungskapazität überschreitenden Schwefeldioxid-Fracht zu SO₃ erforderliche Sauerstoffmenge um maximal 20 % übersteigt.

Der Sauerstoff für die der Auslegungskapazität der Kontaktanlage entsprechende Schwefeldioxid-Fracht wird vorzugsweise als Luftsauerstoff zugegeben. Für die die Auslegungskapazität der Kontaktanlage überschreitende Schwefeldioxid-Fracht wird erfindungsgemäß nur ein Sauerstoff: Schwefeldioxid-Volumenverhältnis im Bereich von 0,5 bis 0,6 zu 1, vorzugsweise von 0,5 zu 1 eingestellt, wobei vorzugsweise Sauerstoff-angereicherte Luft, besonders bevorzugt Sauerstoff zugemischt wird.

Vorzugsweise wird eine Sauerstoffmenge zugemischt, die der für die Oxidation der die Auslegungskapazität überschreitenden Schwefeldioxid-Fracht zu S0₃ stöchiometrisch erforderlichen Sauerstoffmenge entspricht. Da für die erhöhte Kapazität Sauerstoff nur in der stöchiometrisch erforderlichen Menge eingesetzt wird, ist es wirtschaftlich, diesen in Form hoch angereicherter Luft oder reinem Sauerstoff einzusetzen. Dadurch bleibt trotz erhöhter Kapazität der Kontaktgasvolumenstrom nahezu konstant.

Durch die Einstellung des Verhältnisses Sauerstoff zu Luft bei der Bereitung des Kontaktgases aus dem getrockneten Prozessgas und die Einstellung des Teilstromes, der durch das erfindungsgemäße.Vorkontaktsystem geleitet wird, kann die geforderte Kapazitätserhöhung unter wirtschaftlich optimalen Bedingungen unter Verwendung des ursprünglichen Kontaktsystems erreicht werden.

Durch die Möglichkeit, den gesamten SO₂-reichen Kontaktgasstrom oder nur einen einstellbaren Teilstrom durch das Vorkontaktsystem zu leiten, ist es möglich, den Betrieb der gesamten Regenerierungsanlage optimal an die jeweils erforderliche Kapazitätserhöhung der Reststoffspaltung anzupassen.

Ein wesentlicher Vorteil der Erfindung ist es, dass die Emission von Schwefeldioxid trotz erhöhter Kapazität nicht erhöht wird:

Die Erfindung bietet gegenüber dem Stand der Technik mehrere Vorteile.

Mit einen relativ geringen Investitionsaufwand kann die Kapazität einer vorhandenen Anlage wesentlich erhöht werden. Der Druckverlust der Gesamtanlage wird um den Druckverlust des Vorkontaktsystems erhöht. Der spezifische Energiebedarf in Bezug auf die produzierte Schwefelsäure ist aber nahezu unverändert. Er kann weiter verringert werden, wenn ein Teil der dem Prozessgas zugemischten Luft durch Sauerstoff ersetzt wird.

Die emittierte Schwefeldioxid-Fracht bleibt trotz Kapazitätserhöhung unverändert; wenn im Sinne der Erfindung das Kontaktsystem weiterhin entsprechend den Auslegungsbedingungen betrieben wird. Das bedeutet, das der Schwefeldioxid-Umsatz der Gesamtanlage erhöht und demzufolge die produktionsspezifische Schwefeldioxid-Emission verringert wird.

Das Vorkontaktsystem umfasst den Vorkontaktkessel, den Vorkontaktwärmeaustauscher und den Vorkontaktzwischenabsorber. Als Vorkontaktkessel zur Durchführung des erfindungsgemäßen Verfahrens eignet sich besonders gut ein zylindrischer Kontaktkessel, in dem sich, umgeben von einem zylindrischen Gasanströmraum, ein von zwei zylindrischen, gelochten Blechen gebildeter Ringraum zur Aufnahme der Katalysatormasse um einen zentralen Zylinderraum zum Sammeln der Reaktionsgase befindet, die die Katalysatormasse von außen nach innen durchströmen. Vorzugsweise wird als Vorkontaktwärmeaustauscher direkt über oder unter dem Vorkontaktkessel ein Rohrbündelwärmeaustauscher montiert, durch dessen Rohre die Gase aus dem zentralen Zylinderraum des Vorkontaktkessels geleitet werden. Der Raum um die Rohre des Vorkontaktwärmeaustauschers, der mit mehreren Umlenkblechen ausgestattet ist, wird von dem SO₂-abgereicherten Gas aus dem Vorkontaktzwischenabsorber durchströmt.

Die Vorteile der Erfindung sollen an Beispielen verdeutlicht werden, ohne dass dadurch der Umfang der Erfindung eingeschränkt wird. Alle in den Beispielen enthaltenen Angaben zu Volumenströmen von Gasen beziehen sich auf Standard-Druck und -Temperatur.

### Beispiel 1 (Vergleichsbeispiel)

In zwei Spaltöfen wurden je 12 m³/h Reststoff, bestehend aus 41,3 Gew-% Schwefelsäure, 27,5 Gew-% Ammoniumsulfat, 27,5 Gew-% Wasser und 3,7 Gew-% organische Stoffe bei 1000 °C thermisch gespalten. Zusätzlich wurde Schwefel zur Kompensation von Schwefelsäureverlusten in den Ofen eingespeist. Die erforderliche Spaltenergie wurde durch Verbrennen von insgesamt 3,4 t/h schwerem Heizöl mit Luft aufgebracht. Der aufbereitete und getrocknete Prozessgasstrom aus den beiden Spaltöfen in Höhe von 56 000 m³/h enthielt 8,3 Vol-% SO₂ und 2,6 Vol-% O₂.

Durch Mischen mit 20 000 m³/h getrockneter Luft wurden 76 000 m³/h Kontaktgas mit 6,12 Vol-% SO₂ und 7,34 Vol-% O₂ erhalten. Das Gas wurde in einer Doppelkatalyse-Schwefelsäureanlage mit 5-Horden-Kontaktkessel zu 20.6 t/h Schwefelsäure umgesetzt.

### Beispiel 2 (Vergleichsbeispiel)

Durch den Einsatz von 2 500 m³/h Sauerstoff und entsprechende Reduzierung der Luftzufuhr in einen der Spaltöfen konnten in diesem Ofen 20 m³/h Reststoff gespalten werden. Der zweite, parallel geschaltete Ofen war außer Betrieb genommen worden. Der spezifische Brennstoffverbrauch lag um 18 % niedriger als im Vergleichsbeispiel. Es fielen 28 000 m³/h mit 13,85 Vol-% S0₂ und 2,6 Vol-% O₂ an. Durch Mischen mit 38 300 m³/h getrockneter Luft wurden 66 300 m³/h Kontaktgas mit 6,12 Vol-% SO₂ und 13 Vol-% O₂ erhalten, die im Kontaktsystem zu Schwefelsäure umgesetzt wurden.

Die Prozessparameter bei der Reststoffspaltung waren so gewählt worden, dass bei Betrieb beider Spaltöfen wieder 56 000 m³/h getrocknetes Prozessgas angefallen wären, wodurch Probleme bei der Prozessgaskühlung und -aufbereitung vermieden worden wären. Die Kapazitätserhöhung in der gesamten Spaltanlage infolge des Sauerstoffeinsatzes hätte 67 % betragen. Diese wären aber im Bereich des Schwefelsäure-Kontaktsystems aufgetreten.

Durch Mischen des Prozessgases mit 38 000 m³/h getrockneter Luft zwecks Einstellung eines O₂:SO₂-Verhältnisses von 1,2, wie im Vergleichsbeispiel, hätten sich 94 000 m³/h Kontaktgas mit 8,2 Vol-% SO₂ und 9,9 Vol-% O₂ ergeben. Für eine so hohe SO₂-Konzentration ist das Kontaktsystem nicht ausgelegt. Das weitere Verdünnen der Gase auf 6,12 Vol-% SO₂ mittels Luft hätte zu 126 600 m³/h Kontaktgas mit 12,64 Vol-% O₂ geführt Beide Volumenströme wären ebenso wie die SO₂-Fracht für-das vorhandene -Kontaktsystem-zu hoch gewesen.

### Beispiel 3

Erfindungsgemäß wird deshalb ein Vorkontaktsystem installiert. Dieses besteht aus einem Vorkontaktkessel, in dem die Katalysatormasse in einen zylindrischen Ringraum eingefüllt wird, einem über dem Vorkontaktkessel montierten Rohrbündelwärmeaustauscher (Vorkontaktwärmeaustauscher) und einem Gleichstrom-Zwischenabsorber (Vorkontaktzwischenabsorber).

Die in der Spaltanlage produzierten 56 000 m³/h getrocknetes Prozessgas mit 13,85 Vol-% SO₂ und 2,6 Vol-% O₂ werden mit nur 23 500 m³/h getrockneter Luft gemischt. Nach der Verdichtung des Gases mittels des Kontaktgas-Gebläses werden zusätzlich 850 m³/h Sauerstoff in das Kontaktgas eingeblasen. Damit ergibt sich ein Kontaktgasstrom von ca. 80 500 m³/h mit 9,7 Vol-% SO₂ und 8,94 Vol-% O₂, der im ursprünglichen Kontaktsystem auf 430 °C erhitzt wird.

Vor der Einleitung in die Kontakthorde 1 werden 58 000 m³/h des erhitzten Gases (erster Teilstrom) durch das Vorkontaktsystem geleitet. Das Gas strömt aus dem äußeren Ringraum des Vorkontaktkessels durch die Katalysatormasse, aus der es mit600 °C in den zentralen Zylinderraum strömt. Das 5,8 Vol-% SO₃ enthaltende Gas wird durch die Rohre des über dem Vorkontaktkessel angeordneten Vorkontaktwänneaustaüschers geleitet und auf 290 °C abgekühlt. Im Gleichstrom-Zwischenabsorber des Vorkontaktsystems wird das SO₃ absorbiert. Anschließend wird das Gas im Vorkontaktwärmeaustauscher auf 435 °C erhitzt und mit dem restlichen, 9,7 Voi-% SO₂ enthaltenden Kontaktgas (zweiter Teilstrom) gemischt. Als Gemisch werden in die Horde 1 des Kontaktkessels in Übereinstimmung mit den Auslegungsparametern ca. 76 000 m³/h Gas mit 6,1 Vol-% SO₂ und 7,3 Vol-% O₂ eingeleitet. Insgesamt werden 34 t/h Schwefelsäure in der Anlage produziert. Der Abgasvolumenstrom und dessen SO₂-Fracht sind gegenüber Beispiel 1 unverändert.

### Beispiel 4

Die 56 000 m³/h Prozessgas mit 13,85 Vol-% SO₂ und 2,6 Vol-% O₂ werden mit 8400 m³/h getrockneter Luft und 2 200 m³/h Sauerstoff gemischt. Die resultierenden 66 600 m³/h Kontaktgas werden durch das Vorkontaktsystem geleitet, in dem 55 % des SO₂ zu SO₃ umgesetzt werden. Nach der SO₃-Absorption im Vorkontaktzwischenabsorber resultiert ein Gasstrom von 60 200 m³/h mit 5,8 Vol-% SO₂ und 7,0 Vol-% O₂, der im Vorkontaktwärmeaustauscher auf 450 °C aufgeheizt und in die Horde 1 des Kontaktsystems eingeleitet wird.

Durch den erhöhten Sauerstoffeinsatz wird der Kontaktgasvolumenstrom so verkleinert, dass der Druckverlust in der um das Vorkontaktsystem erweiterten Anlage an die Leistungsfähigkeit des Kontaktgas-Gebläses angepasst wird. Im Vergleich zu Beispiel 1 ist der Abgasvolumenstrom bei gleicher SO₂-Konzentration und demzufolge die SO₂-Emission - um 18 % geringer.

## Patentansprüche

1. Verfahren zum Regenerieren von Schwefelsäure aus schwefelhaltigen Reststoffen, umfassend folgende Verfahrensschritte: thermische Spaltung der Reststoffe in einem Spaltreaktor durch Verbrennen eines oder mehrerer Energieträger mit einem Oxidationsmittel in Form von Sauerstoff unter Bildung von Prozessgas mit vorgegebenem Schwefeldioxid-Gehalt, Erzeugen von Kontaktgas durch Mischen des Prozessgases mit Sauerstoff-haltigem Gas, Einleiten des Kontaktgases in einen Kontaktkessel einer Schwefelsäure-Kontaktanlage, und katalytische Umsetzung des im Kontaktgas enthaltenen Schwefeldioxides zu Schwefelsäure und/oder Oleum, **dadurch gekennzeichnet, dass** mindestens ein erster Teilstrom des Kontaktgases vor dem Einleiten in den Kontaktkessel einem Vorkontaktkessel zugeführt wird, in welchem Schwefeldioxid unter Bildung eines SO₃-haltigen Reaktionsgases bei einem eingestellten Sauerstoff: Schwefeldioxid-Volumenverhältnis im Bereich von 0,5 bis 0,6 zu 1 oxidiert wird, und dass das SO₃-haltige Reaktionsgas in einen Zwischenabsorber eingeleitet, darin SO₃ absorbiert, und als SO₂-abgereichertes Gas anschließend in den Kontaktkessel eingeleitet wird.

2. Verfahren nach Anspruch 1, **dadurch gekennzeichnet, dass** das SO₂-abgereicherte Gas vor dem Einleiten in den Kontaktkessel auf 370 °C bis 450 °C aufgeheizt wird.

3. Verfahren nach Anspruch 1 oder 2, **dadurch gekennzeichnet, dass** das SO₃-haltige Reaktionsgas vor Einleitung in den Zwischenabsorber auf eine Temperatur im Bereich zwischen 180°C und 300 °C abgekühlt wird.

4. Verfahren nach einem der vorhergehenden Ansprüche, **dadurch gekennzeichnet, dass** die Schwefelsäure-Kontaktanlage eine Auslegungskapazität für eine vorgegebene Schwefeldioxid-Fracht aufweist, und dass die Schwefeldioxid-Fracht des Kontaktgases die Auslegungskapazität der Kontaktanlage um das 1,1- bis 2-fache übersteigt.

5. Verfahren nach einem der vorhergehenden Ansprüche, **dadurch gekennzeichnet, dass** das SO₂-abgereicherte Gas vor dem Einleiten in den Kontaktkessel mit einem zweiten Teilstrom des Kontaktgases mit höherer Schwefeldioxid-Konzentration gemischt wird.

6. Verfahren nach Anspruch 1, 4 und 5, **dadurch gekennzeichnet, dass** der Volumenanteil des ersten Teilstroms so gewählt wird, dass durch das Mischen mit dem zweiten Teilstrom ein Kontaktgasgemisch erzeugt wird, das eine Schwefeldioxid-Fracht aufweist, die von der Soll-Schwefeldioxid-Fracht um maximal +/- 10% abweicht.

7. Verfahren nach Anspruch 1, **dadurch gekennzeichnet, dass** im Vorkontaktkessel im Bereich zwischen 40 % und 60 % der Schwefeldioxid-Fracht des ersten Teilstroms oxidiert werden.

8. Verfahren nach Anspruch 1, **dadurch gekennzeichnet, dass** dem Prozessgas das Sauerstoff-haltige Gas in einer Menge zugemischt wird, derart, dass die dabei zugemischte Sauerstoffmenge die für eine stöchiometrische Umsetzung der die Soll-Schwefeldioxid-Fracht überschreitenden Schwefeldioxid-Fracht zu SO₃ erforderliche Sauerstoffmenge um maximal 20 % übersteigt.

9. Verfahren nach Anspruch 8, **dadurch gekennzeichnet, dass** eine Sauerstoffmenge entsprechend der für die Oxidation der die Soll-Schwefeldioxid-Fracht überschreitenden Schwefeldioxid-Fracht zu SO₃ stöchiometrisch erforderlichen Sauerstoffmenge zugemischt wird.

10. Verfahren nach Anspruch 8 oder 9, **dadurch gekennzeichnet, dass** diese Sauerstoffmenge in Form von sauerstoffangereicherter Luft oder von Sauerstoff zugegeben wird.

## Claims

1. Method for the regeneration of sulphuric acid from sulphur-containing residues, comprising the following method steps: thermal cleavage of the residues in a cleavage reactor by combustion of one or more energy media with an oxidizing agent in the form of oxygen with formation of process gas having a predetermined sulphur dioxide content, production of the contact gas by mixing of the process gas with oxygen-containing gas, introduction of the contact gas into a contact vessel of a sulphuric acid contact plant, and catalytic reaction of the sulphur dioxide present in the contact gas to give sulphuric acid and/or oleum, **characterized in that** at least one first part-stream of the contact gas is fed, prior to introduction into the contact vessel, to a pre-contact vessel in which sulphur dioxide is oxidized with formation of an SO₃-containing reaction gas at a set oxygen:sulphur dioxide volume ratio in the range of 0.5 - 0.6 to 1, and **in that** the SO₃-containing reaction gas is introduced into an intermediate absorber, SO₃ is absorbed therein, and gas depleted in SO₂ is then introduced into the contact vessel.

2. Method according to Claim 1, **characterized in that** the gas depleted in SO₂ is heated to 370°C to 450°C prior to introduction into the contact vessel.

3. Method according to Claim 1 or 2, **characterized in that** the SO₃-containing reaction gas is cooled to a temperature in the range between 180°C and 300°C prior to introduction into the intermediate absorber.

4. Method according to any of the preceding claims, **characterized in that** the sulphuric acid contact plant has a design capacity for a predetermined sulphur dioxide load, and **in that** the sulphur dioxide load of the contact gas exceeds the design capacity of the contact plant by 1.1 to 2 times.

5. Method according to any of the preceding claims, **characterized in that**, prior to the introduction into the contact vessel, the gas depleted in SO₂ is mixed with a second part-stream of the contact gas having a higher sulphur dioxide concentration.

6. Method according to Claims 1, 4 and 5, **characterized in that** the volume fraction of the first part-stream is chosen so that mixing with the second part-stream produces a contact gas mixture which has a sulphur dioxide load which deviates from the required sulphur dioxide load by not more than +/- 10%.

7. Method according to Claim 1, **characterized in that** in the range between 40% and 60% of the sulphur dioxide load of the first part-stream are oxidized in the pre-contact vessel.

8. Method according to Claim 1, **characterized in that** the oxygen-containing gas is mixed with the process gas in an amount such that the amount of oxygen admixed exceeds by not more than 20% the amount of oxygen required for a stoichiometric reaction of the sulphur dioxide load exceeding the required sulphur dioxide load.

9. Method according to Claim 8, **characterized in that** an amount of oxygen corresponding to the amount of oxygen stoichiometrically required for the oxidation of the sulphur dioxide load exceeding the required sulphur dioxide load to SO₃ is admixed.

10. Method according to Claim 8 or 9, **characterized in that** this amount of oxygen is added in the form of oxygen-enriched air or of oxygen.

## Revendications

1. Procédé de régénération d'acide sulfurique à partir de matières résiduelles sulfureuses, comportant les étapes de procédé suivantes : rupture thermique des matières résiduelles dans un réacteur de fission par la combustion d'un ou d'une pluralité de porteurs d'énergie avec un agent oxydant en forme d'oxygène sous formation de gaz de procédé ayant une teneur en dioxyde de soufre prédéterminée, génération de gaz de contact par le mélange du gaz de procédé avec du gaz oxygéné, introduction du gaz de contact dans une chaudière de contact d'une installation de contact d'acide sulfurique et transformation catalytique du dioxyde de soufre contenu dans le gaz de contact en acide sulfurique et/ou oléum, **caractérisé en ce qu'**avant d'être introduit dans la chaudière de contact au moins un premier flux partiel du gaz de contact est alimenté dans une chaudière d'avant-contact, dans laquelle sous formation d'un gaz de réaction contenant du SO₃ du dioxyde de soufre est oxydé à un rapport volume d'oxygène : dioxyde de soufre ajusté dans une gamme de 0,5 à 0,6 à 1 et **en ce que** le gaz de réaction contenant du SO₃ est introduit dans un absorbeur intermédiaire, y absorbe du S0₃ et est introduit ensuite dans la chaudière de contact en tant que gaz appauvri en SO₂.

2. Procédé selon la revendication 1, **caractérisé en ce qu'**avant d'être introduit dans la chaudière de contact le gaz appauvri en SO₂ est chauffé entre 370°C et 450°C.

3. Procédé selon la revendication 1 ou 2, **caractérisé en ce qu'**avant d'être introduit dans l'absorbeur intermédiaire le gaz de réaction contenant du SO₃ est refroidi jusqu'à une température dans la gamme entre 180°C et 300°C.

4. Procédé selon l'une des revendications précédentes, **caractérisé en ce que** l'installation de contact d'acide sulfurique a une capacité nominale pour une charge de dioxyde de soufre prédéterminée et **en ce que** la charge de dioxyde de soufre du gaz de contact dépasse d'1,1 - 2 fois la capacité nominale de l'installation de contact.

5. Procédé selon l'une des revendications précédentes, **caractérisé en ce qu'**avant d'être introduit dans la chaudière de contact le gaz appauvri de SO₂ est mélangé avec un deuxième flux partiel du gaz de contact ayant une concentration de dioxyde de soufre plus élevée.

6. Procédé selon la revendication 1, 4 et 5, **caractérisé en ce que** la part de volume du premier flux partiel est choisie de manière telle que grâce au mélange avec le deuxième flux partiel un mélange de gaz de contact est généré qui a une charge de dioxyde de soufre qui diffère d'au maximum +/-10 % de la charge de dioxyde de soufre désirée.

7. Procédé selon la revendication 1, **caractérisé en ce que** dans la chaudière d'avant-contact dans l'ordre entre 40 % et 60 % de la charge de dioxyde de soufre du premier flux partiel sont oxydés.

8. Procédé selon la revendication 1, **caractérisé en ce que** le gaz contenant de l'oxygène est ajouté dans le gaz de procédé en une quantité de manière telle que la quantité d'oxygène ajoutée dépasse d'au maximum 20 % la quantité d'oxygène nécessaire pour une transformation stoechiométrique de la charge de dioxyde de soufre en SO₃, laquelle dépasse la charge de dioxyde de soufre désirée.

9. Procédé selon la revendication 8, **caractérisé en ce qu'**une quantité d'oxygène est ajoutée qui correspond à la quantité d'oxygène stoechiométriquement nécessaire pour l'oxydation de la charge de dioxyde de soufre en S0₃ qui dépasse la charge de dioxyde de soufre désirée.

10. Procédé selon la revendication 8 ou 9, **caractérisé en ce que** cette quantité d'oxygène est ajoutée en forme d'air enrichi d'oxygène ou sous forme d'oxygène.
